# EUROPÄISCHE PATENTSCHRIFT

(11) **EP 2 483 950 B1**
(45) Veröffentlichungstag und Bekanntmachung des Hinweises auf die Patenterteilung: **30.03.2016**
(21) Anmeldenummer: 10747847.1
(22) Anmeldetag: 23.08.2010
(51) Int. Cl.: H01M 2/16, H01M 10/052, H01M 10/0562, C04B 35/82

(54) **VERFAHREN ZUR HERSTELLUNG EINER KERAMIK-ELEKTRODENSEPARATORVORRICHTUNG**
METHOD FOR PRODUCING A CERAMIC ELECTRODE SEPARATOR DEVICE
PROCÉDÉ DE PRODUCTION D'UN DISPOSITIF DE SÉPARATEUR D'ÉLECTRODE CÉRAMIQUE

(30) Priorität: 01.10.2009 DE 102009045240
(43) Veröffentlichungstag der Anmeldung: 08.08.2012
(73) Patentinhaber: Robert Bosch GmbH, 70442 Stuttgart (DE)
(72) Erfinder: AUMAYER, Richard, 14059 Berlin (DE); EISELE, Ulrich, 70199 Stuttgart (DE)
(86) Internationale Anmeldenummer: PCT/EP2010/062260
(87) Internationale Veröffentlichungsnummer: WO 2011/038996

(56) Entgegenhaltungen:
- EP-A1- 1 049 186
- WO-A1-2004/021477
- JP-A- 11 185 815
- US-A1- 2006 019 148

## Beschreibung

### Technisches Gebiet

Die Erfindung betrifft ein Herstellungsverfahren und eine Vorrichtung für elektrische Akkumulatoren, insbesondere für Lithiumionenbatterien. Die erfindungsgemäß ausgestatteten Akkumulatoren eignen sich insbesondere zur Verwendung als Traktionsenergiespeicher für Automobilanwendungen.

### Stand der Technik

Neben Akkumulatoren, die auf flüssigen Elektrolyten basieren, sind Akkumulatoren bekannt, die mit Festelektrolyten arbeiten, beispielsweise Lithiumionenbatterien. Hierbei werden Metallionen leitende Keramikwerkstoffe verwendet, die in Form von dünnen Schichten ausgebildet sind.

Die Keramikwerkstoffe werden durch chemische Synthese als Pulver vorgesehen und als dünne keramische Folie verarbeitet und gesintert. Es ist eine inhärente Materialeigenschaft von Keramikwerkstoffen, dass diese nur sehr bedingt biegefähig sind und daher als Folie verarbeitet spröde und wenig biegsam sind. Diese mechanischen Eigenschaften erschweren zum einen die Weiterverarbeitung bei der Herstellung eines Akkumulators und führen zum anderen zu einer hohen Empfindlichkeit gegenüber mechanischen Belastungen, beispielsweise Stöße oder Vibrationen, wie sie bei automotiven Anwendungsbereichen auftreten.

Die EP 1 049 186 A1 offenbart einen geformten Festelektrolyt bestehend aus einer Polymerzusammensetzung, die aus 50 bis 100 Gew.-% 1,2 Polybutadien, das einen 1,2-Vinylbindungsanteil von 70% oder mehr und eine Kristallinität von 5 bis 50 % hat, und aus 0 bis 50 Gew.-% eines polaren Gummis besteht, und einem festen Elektrolyt.

Die US 2006/0019148 A1 offenbart einen protonenleitenden Festelektrolyt mit einem protonenleitenden anorganischen Oxid.

Es ist daher eine Aufgabe der Erfindung, ein Herstellungsverfahren sowie Vorrichtungen vorzusehen, bei denen Festelektrolytwerkstoffe eine verbesserte Verarbeitbarkeit und eine höhere mechanische Belastbarkeit aufweiseri.

### Offenbarung der Erfindung

Diese Aufgabe wird gelöst von dem Gegenstand der unabhängigen Ansprüche.

Um die Verarbeitbarkeit und die mechanische Belastbarkeit zu erhöhen, wird erfindungsgemäß ein Verburidstoff vorgesehen, der die Keramikpartikel umfasst. Der Verbundstoff umfasst ferner ein Bindemittel, in dem die Keramikpartikel verteilt sind. Die bei Verbundwerkstoffen üblich, ergeben sich daher neue Materialeigenschafteri, wobei das Bindemittel die gewünschte mechanische Stabilität vorsieht, die sowohl im Einsatz als auch bei der Weiterverarbeitung bedeutende Vorteile mit sich bringt (längere Lebensdauer bei Verwendung unter mechanischen Belastungen, einfache Verarbeitbarkeit), und wobei die Keramikpartikel den Verbundwerkstoff mit Festelektrolyteigenschaften ausstatten. Insbesondere die Herstellung als Verbundstoff mit einem geeigneten Bindemittel sieht eine besonders schonende Verarbeitung der synthetisierten Keramikpartikel vor, wobei im Vergleich hierzu bei bekannten Herstellungsverfahren die Keramikpartikel bei der Verarbeitung als Schicht, beispielsweise durch Sintern, starken Wärmebelastungen und mechanischen Belastungen ausgesetzt sind, die die Festelektrolyteigenschaften beeinträchtigen, beispielsweise durch Bilden unerwünschter Kristallstrukturen. Das erfindungsgemäße Verfahren kann unter Einsatz kostengünstiger Verfahren wie Kalandrieren bzw. Walzen vorgesehen werden, wobei die hierzu erforderlichen Herstellungsvorrichtungen in weitem Maße zur Verfügung stehen.

Das erfindungsgemäße Verfahren zur Herstellung einer Keramik-Elektrodenseparatorvorrichtung sieht daher vor, zunächst Keramikpartikel aus einem Ionen leitenden Material zur Verfügung zu stellen. Beispielsweise durch Synthetisieren des Keramikwerkstoffs und darauf folgendes Mahlen können die gewünschten Keramikpartikel vorgesehen werden, vorzugsweise aus Metallionen leitendem Material bzw. aus Materialien, die für Festelektrolyte geeignet sind. Derartige Festelektrolyte sind insbesondere aus Li-Ionen leitenden Materialien vorgesehen. Erfindungsgemäß werden die Keramikpartikel mit Bindemittel, vorzugsweise als Feststoff in Partikelform, oder auch als härtbares Harz, gemischt. Vorzugsweise werden die Keramikpartikel gleichmäßig in dem Bindemittel verteilt. Das Bindemittel kann ein oder mehrere Bindematerialien in flüssiger oder fester Form umfassen. Insbesondere ist das Bindemittel geeignet, in einen fließfähigen Zustand überführt zu werden, oder ist ein fließfähiges Bindemittel. Zudem ist das Bindemittel ein verfestigbares Bindemittel, d.h. ist geeignet, von einem fließfähigen Zustand in einen festen Zustand überführt zu werden. Wenn das Bindemittel zunächst in fester Form vorgesehen ist, werden die Keramikpartikel mit dem Bindemittel, welches ebenso in Partikelform vorliegt, gemischt. Insbesondere können mehrere Bindemittel verwendet werden, die entweder bereits als flüssiges Bindemittel vorgesehen sind, oder die in einen flüssigen Zustand überführbar sind, wobei beide Arten von Bindemittel als Komponenten des Bindemittels dienen können, mit denen die Keramikpartikel gemischt werden. Das erfindungsgemäße Verfahren sieht ferner vor, die Mischung gemäß einer vorgegebenen Form auszuformen. Während des Ausformens liegt das Bindemittel vorzugsweise zumindest teilweise in fließfähiger Form (beispielsweise geschmolzen) vor. Nach dem Ausformen wird die Mischung verfestigt bzw. ausgehärtet. Das Verfestigen kann bereits während des Ausformens teilweise vorgesehen werden, wobei eine Formbarkeit der Mischung während des Ausformens dadurch gegeben ist, dass ein Teil des Bindemittels sich noch in fließfähigem bzw. plastischem Zustand befindet. Verfestigen umfasst hierbei Aushärten, das mit einer chemischen Reaktion einher geht (bsp. Vernetzen) sowie Erstarren, d.h. eine Änderung des physikalischen Zustands von flüssig (oder filiessfähig) zu festeren, plastischen bzw. elastischen Materialzuständen.

Erfindungsgemäß wird die Mischung in eine Matrix eingebracht, insbesondere in Zwischenräume einer Matrix. Somit bilden nach dem Verfestigen die Mischung und die Matrix einen Verbundwerkstoff, bei dem die Matrix der ausgeformten Mischung zusätzliche mechanische Stabilität verleiht. Hierbei dient das Bindemittel nicht nur dazu, Keramikpartikel untereinander zu verbinden, sondern auch, um die Mischung und insbesondere die Keramikpartikel mit der Matrix selbst zu verbinden. Die so dargestellten Verbindungen basieren im Wesentlichen auf Adhäsionskräften. Erfindungsgemäß wird die Mischung vor dem Verfestigen in die Zwischenräume der Matrix eingebracht. Mit anderen Worten wird die Mischung in plastischen, d.h. in zumindest teilweise fließfähigen Zustand in die Matrix eingebracht. Das Einbringen der Mischung in die Zwischenräume führt vorzugsweise dazu, dass die Zwischenräume der Matrix im Wesentlichen vollständig mit der Mischung ausgefüllt sind. Die Matrix wird durch faserförmige Festkörper vorgesehen. Daher wird die Mischung in eine Fasermatrix, in einen flexiblen textilen Träger, in ein Vlies, in ein nicht gewebtes Textil oder in ein gewebtes Textil eingebracht und füllt die Zwischenräume der Fasermatrix, des Trägers, des Vlieses bzw. des Textils aus. Die Matrix, in die die Mischung eingebracht wird, wird durch Fasern vorgesehen, die elektrisch nicht leitend sind. Die Fasern sind somit aus einem elektrisch nicht leitenden Material vorgesehen, insbesondere aus Glasfaser oder einer Kunststofffaser (beispielsweise eine Aramidfaser). Falls das Bindemittel in einen fließfähigen bzw. plastischen Zustand überführt wird, um ausgeformt zu werden bzw. gemischt zu werden, wobei das Überführen in den fließfähigen bzw. plastischen Zustand durch Erwärmen vorgesehen wird, dann liegt die Zersetzungstemperatur bzw. Schmelztemperatur des Materials, aus dem die Fasern vorgesehen sind, vorzugsweise wesentlich über der Temperatur, bei der das Bindemittels vom festen in einen fließfähigen bzw. plastischen Zustand übergeht, Insbesondere liegt die Temperatur, bei der das Bindemittel in einen fließfähigen bzw. plastischen Zustand übergeht vorzugsweise deutlich unter der Temperatur, bei der die Keramikpartikel in ihrer Kristallstruktur und/oder in ihrer chemischen Zusammensetzung verändert werden. Typischerweise wird das Erwärmen des Bindemittels vorgesehen mit einer Temperatur von über 100 °C, jedoch weniger als 200 °C, wobei insbesondere Matrizen aus Glasfaser einer derartigen Temperatur ohne strukturelle Änderungen in der Matrix standhalten.

Wie bereits bemerkt, wird das Bindemittel als ein Bindemittel vorgesehen, das in einen plastischen bzw. verformbaren oder fließfähigen Zustand überführt werden kann, beispielsweise in Form eines Thermoplasts. Daher wird das Bindemittel vorzugsweise als Polymer, insbesondere als Polymerpulver, vorgesehen. Als Polymer eignen sich insbesondere Polymere mit Polyethylen oder Polypropylen oder Mischungen hiervon, die gegebenenfalls weitere Zusätze wie Weichmacher oder Ähnliches umfassen. Ferner eignen sich Polyester oder Polyamide als Bindemittel. Ein als Thermoplast ausgeführtes Bindemittel bzw. ein Bindemittel, das sich durch Erwärmung in einen plastischen, d.h. zumindest teilweise fließfähigen, verformbaren Zustand überführen lässt, wird verfestigt durch Verringern der Temperatur, wodurch sich das Bindemittel wieder in einen festen Zustand überführen lässt. Das Verfestigen wird bei Thermoplasten somit durch Erkalten des Bindemittels (d.h. des Thermoplasts) vorgesehen. Alternativ zu oder in Kombination mit einem als Thermoplast ausgeführten Bindemittel kann ein Klebemittel verwendet werden. Ein derartiges Klebemittel kann beispielsweise ein Lösungsmittel umfassen, dessen Verdampfung zur Verfestigung/Aushärtung des Klebemittels führt. Die Verfestigung kann durch Erwärmung unterstützt werden. Ferner kann das Klebemittel ein Mehrkomponentenmittel sein, das durch Polymerisation aushärtet, wobei das Aushärten (d.h. allgemein: das Verfestigen) durch Erwärmen oder durch Bestrahlung mittels UV-Strahlen unterstützt wird. Als Wärmequelle können insbesondere Infrarot-Strahler dienen. Ferner können derartige Wärmequellen auch verwendet werden, um ein als Thermoplast ausgebildetes Bindemittel vom festen in einen fließfähigen bzw. plastischen Zustand zu überführen.

Gemäß einer weiteren Ausführungsform wird die Mischung unter Druck ausgeformt bzw. verdichtet. Vorzugsweise wird zumindest ein Teil des Schritts des Verfestigens während des Ausformens ausgeführt. Bei der Verwendung von als Thermoplast ausgeführten Bindemitteln wird ferner vorzugsweise während und/oder vor dem Ausformen das Bindemittel erwärmt, um dieses in einen plastischen Zustand zu überführen. Daher wird die Mischung vorzugsweise durch Kalandrieren ausgeformt, wobei das Kalandrieren vorsieht, die Mischung gleichzeitig (weiter) zu erwärmen und durch Walzen zu verdichten. Da beim Kalandrieren die Flächen, welche Druck auf die Mischung ausüben, ebenso Wärme auf die Mischung übertragen (oder zumindest die Temperatur konstant halten), wird beim Kalandrieren gleichzeitig ausgeformt und die Mischung zumindest teilweise in einen plastischen bzw. fließfähigen Zustand überführt. Weitere Möglichkeiten der Ausformung sind Walzen, Pressen, Verdichten oder Stempeln der Mischung gemäß einer vorgegebenen Form. Vorzugsweise entspricht die Form einer dünnen Platte bzw. einer dünnen Schicht oder Folie, die eine konstante Schichtdicke aufweist, und die sich entlang einer Ebene erstreckt. Das Ausformen kann auch ein wiederholtes Ausüben von Druck auf die Mischung bzw. ein wiederholtes Verdichten umfassen. Insbesondere kann der Schritt des Überführens der Mischung in einen plastischen Zustand wiederholt werden, vorzugsweise vor bzw. während des Ausübens von Druck.

Die Keramikpartikel innerhalb der Mischung sind vorzugsweise als Pulver oder als feines Granulat vorgesehen. Die Partikelgröße ist vorzugsweise kleiner als 1 mm, 500 µm, 200 µm, 50 µm, 10 µm, 5 µm, 2 µm oder 1 µm. Die Streuung der Partikelgröße beträgt vorzugsweise weniger als 100 %, 50 %, 20 %, 10 % oder 5 %. Das Vorsehen der Keramikpartikel als Pulver kann ferner umfassen, die Keramikpartikel zu sieben, um Partikel mit Partikelgrößen größer als ein vorgegebener Schwellwert auszusondern. Insbesondere werden die Keramikpartikel vorzugsweise vorgesehen, indem eine synthetisierte Masse fein gemahlen wird. Als Material für die Keramikpartikel eignen sich Elektrolytmaterialien, insbesondere Materialien, die Metallionen leiten, vorzugsweise Material, das Lithiumionen leitet. Die Keramikpartikel sind somit vorzugsweise aus einem Festelektrolytmaterial vorgesehen, wobei die lonenart, für die das Material leitfähig ist, vom Akkumulatortyp abhängen kann. Insbesondere ist das Keramikmaterial, aus dem die Kerarrükpartikel vorgesehen sind, ein elektrisch nicht leitendes Material (d.h. ein elektrischer Isolator), so dass die entstehende Elektrodenseparatorvorrichtung es ermöglicht, die Leitung von Metallionen (insbesondere Lithiumionen) von der Leitung von Elektronen zu trennen. Da eine Elektrode einer galvanischen Zelle immer als leitende Elektrode vorgesehen ist, wird die entstehende Vorrichtung als Elektrodenseparatorvorrichtung bezeichnet, um darzustellen, dass die Elektronen von dem Keramikpartikelmaterial bzw. von dem Festelektrolytmaterial von der Elektrode separiert werden. Wie auch die Keramikpartikel ist vorzugsweise auch das Bindemittel nicht elektrisch leitend. Die Keramik-Bindemittelmischung ist daher ein elektrischer Isolator, ermöglicht jedoch in verfestigter Form lonentransport, insbesondere von Metallionen bzw. Lithiumionen. Das Festelektrolytmaterial kann ferner vorgesehen sein, nur bestimmte Arten von Ionen zu leiten, beispielsweise nur Metallionen und Lithiumionen, nicht jedoch Sauerstoffionen oder andere Reaktionspartner der Lithiumionen.

Die Erfindung sieht ferner eine Keramik-Elektrodenseparatorvorrichtung vor, die durch Ausführung des erfindungsgemäßen Verfahrens erhalten wird, die eine erfindungsgemäße Keramik-Elektrodenseparatorvorrichtung aus einem Ionen leitenden Material sowie ein Bindemittel umfasst. Der Verbundwerkstoff stellt somit eine Keramik-Bindemittel-Mischung dar. Die Keramikpartikel und das Bindemittel sind zu der Keramik-Bindemittel-Mischung vermischt, wobei das Bindemittel zwischen den Keramikpartikeln angeordnet ist, und durch Adhäsionskräfte die Keramikpartikel miteinander verbindet. Die erfindungsgemäße Vorrichtung umfasst ferner einen Verbundwerkstoff, der als Faserverbundwerkstoff vorgesehen ist. Der Faserverbundwerkstoff wird gebildet aus einer Matrix (d.h. einer Fasermatrix) und der Keramik-Bindemittel-Mischung, die in Zwischenräumen der Matrix angeordnet ist. Die Keramik-Bindemittel-Mischung ist durch Adhäsionskräfte und/oder aufgrund von formschlüssigen Verbindungen mit der Matrix verbunden. Die Matrix umfasst eine Fasermatrix, einen flexiblen textilen Träger, Vlies, nicht gewebtes Textil oder gewebtes Textil. Die Fasern der Matrix sind vorzugsweise zumindest geringfügig elastisch, um mechanische Spannungen, die auf die Elektrodenseparatorvorrichtung wirken, aufzunehmen. Die Matrix ist aus einem elektrisch nicht leitenden Material vorgesehen, erfindungsgemäß aus Glasfasern.

Wie bereits oben beschrieben ist das Bindemittel der Separatorvorrichtung ein Thermoplast, ein Klebemittel, eine Mischung aus Thermoplasten, eine Mischung aus Klebemitteln oder eine Mischung aus Thermoplast und Klebemittel. Das Klebemittel kann ferner Zusatzstoffe wie Lösungsmittel umfassen. Ein als Klebemittel vorgesehenes Bindemittel ist durch Wärme oder durch UV-Licht härtbar. Als Thermoplast werden vorzugsweise Polymere, Co-Polymere oder Polymermischungen verwendet. Bei einem als Klebemittel ausgeführten Bindemittel kann dieses als Monomer vorgesehen sein, das polymerisierbar ist, insbesondere durch Hinzufügen von Härter. Das Bindemittel ist nicht elektrisch leitend und bildet somit einen elektrischen Isolator. Insbesondere die Keramik-Bindemittel-Mischung der Separatorvorrichtung ist elektrisch nicht leitend, jedoch für Ionen, insbesondere für Metallionen, leitend.

Wie bereits anhand des erfindungsgemäßen Verfahrens beschrieben, sind die Keramikpartikel der erfindungsgemäßen Keramik-Elektrodenseparatorvorrichtung Keramikpartikel, die ein Metallionen leitendes Material umfassen, insbesondere ein Lithiumionen leitendes Material. Die Keramikpartikel liegen als Pulver oder als Granulat vor, wie sie oben anhand des erfindungsgemäßen Verfahrens beschrieben sind.

Schließlich wird die Erfindung vorgesehen durch eine galvanische Zelle, die eine erfindungsgemäße Keramik-Elektrodenseparatorvorrichtung oder eine gemäß dem erfindungsgemäßen Verfahren vorgesehen Keramik-Elektrodenseparator-vorrichtung umfasst. Die galvanische Zelle, die auch als Batterie- oder Akkumulatorelement bezeichnet werden kann, umfasst zumindest eine leitende Elektrodenfläche. Insbesondere die galvanische Zelle umfasst ferner vorzugsweise eine weitere Elektrode als Gegenelektrode für die leitende Elektrodenoberfläche, die auf der Oberfläche der Keramik-Elektrodenseparatorvorrichtung vorgesehen ist. Zur Erhöhung der Kapazität bzw. der Ausgangsspannung können mehrere galvanische Zellen bzw. Batterieelemente innerhalb eines Akkumulatorsystems oder Batteriesystems vorgesehen sein. Ein derartiges erfindungsgemäß ausgebildetes Akkumulatorsystem umfasst mehrere galvanische Zellen, die mit erfindungsgemäßen Keramik-Elektrodenseparatorvorrichtungen ausgebildet sind. Als erfindungsgemäße Keramik-Elektrodenseparatorvorrichtung wird die oben definierte Vorrichtung bezeichnet sowie das Erzeugnis, das sich bei der Durchführung des erfindungsgemäßen Verfahrens ergibt.

### Kurze Beschreibung der Zeichnungen

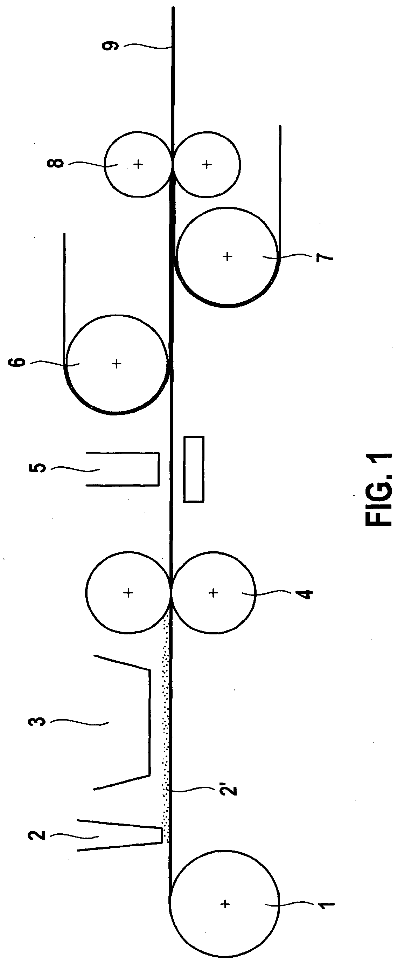

- Die Figur 1 zeigt: eine Vorrichtung zur Ausführung des erfindungsgemäßen Verfahrens.

### Detaillierte Beschreibung der Zeichnung

Die Figur 1 zeigt eine Vorrichtung zur Herstellung der erfindungsgemäßen Keramik-Elektrodenseparatorvorrichtung und dient ferner zur Erläuterung des erfindungsgemäβen Herstellungsverfahrens. Eine Walze oder Spindel 1 sieht eine Glasfasermatte (nicht gewebt) vor, mit einer geringen Dicke von weniger als 1mm. Die Glasfasermatte hat eine dichte Faserstruktur; so dass darauf aufgebrachtes Pulver nur geringfügig oder nicht durch die Glasfasermatte hindurch tritt. Eine Pulverzuführung 2 dient zum Aufbringen der Keramik-Bindemittel-Mischung 2' auf die Glasfasermatte, die von der Glasfaserwalze 1 abgerollt wird. Die Keramik-Bindemittel-Mischung umfasst Keramikpartikel aus Ionen leitendem Material und Polymerpulver. Das von der Zuführung 2 vorgesehene Pulver ist trocken gemischt und wird daher als dünne Pulverschicht 2' auf die Glasfasermatte aufgebracht. Darauf folgt das Aufschmelzen des Polymers mittels eines Infrarotstrahlers 3, an dem die Mischung durch Führen der Glasfasermatte vorbeigeführt wird. In einem darauf folgenden Ausformungsschritt werden durch Walzen 4 des Kalanders die aufgeschmolzene Keramik-Bindemittel-Mischung sowie die Glasfasermatte zusammengepresst. Die Walzen 4 sind vorzugsweise beheizt, so dass die Walzen 4 einen Kalandrierungsprozess vorsehen und als Kalander ausgeführt sind. Bereits während des Aufschmelzens durch den Wärmestrahler 3 dringt zumindest ein Teil der Mischung in die Zwischenräume der Matrix, die von der Glasfasermatte vorgesehen werden. Durch den Kalander 4 wird jedoch gewährleistet, dass die gesamte Mischung in die Zwischenräume der Glasfasermatte eingebracht werden, wobei gleichzeitig die Mischung mit der Glasfasermatte verdichtet wird. Durch den Abstand zwischen den Walzen des Kalanders 4 wird die gewünschte Dicke, d.h. vorgegebene Form, ausgebildet.

Nachdem der Ausformungsschritt durch die Kalandrierung mittels des Kalanders bzw. mittels der Kalandriervorrichtung 4 ausgeführt wurde, folgte eine optische Kontrolle von Fehlstellen mittels einer Kontrollvorrichtung 5, die beispielsweise eine Lichtquelle und einen Detektor umfasst. Der Detektor wird vorzugsweise als bildgebende Vorrichtung dargestellt, so dass ein erfasstes Bild zur Qualitätskontrolle verwendet werden kann. Anhand der Kontrollvorrichtung 5 kann ferner der Prozess, d.h. die Zuführungsrate der Zuführvorrichtung 2, die Wärmeäbgäbe des Wärmestrahlers 3 und gegebenenfalls die Temperatur oder der Druck der Kalandrierwalzen 4 geregelt werden, wobei die Kontrollvorrichtung 5 das Bild anhand der dargestellten Struktur oder Textur verarbeitet, beispielsweise durch Erfassung von Kontrasten.

Durch eine weitere Walze 6 wird eine Elektrode einer ersten Polarität in Form eines Endlosbandes auf die Matrix in Form der Glasfasermatte aufgebracht, in der sich die Keramik-Bindemittel-Mischung befindet. Die Elektrode wird als Metallband vorgesehen. Hierbei wird die Glasfasermatte bzw. die Matrix gespannt, so dass die Walze 6 die Elektrode der ersten Polarität unter einem vordefinierten Druck auf die Glasfasermatte aufdrückt.

Darauf folgt auf der gegenüberliegenden Seite der Matrix (der Glasfasermatte) eine Walze 7, mit der eine Elektrode einer zweiten (der ersten entgegengesetzten) Polarität ebenso als Endlosband aufgebracht wird. Wie auch die Walze 6 übt die Walze 7 durch Spannung der Matrix (der Glasfasermatte) Druck auf die Glasfasermatte aus und presst hierbei die Elektrode (als Endlosband vorgesehen) auf die Glasfasermatte auf. Wie auch das Endlosband, welches von der Walze 6 verarbeitet wird, wird das Endlos band der Walze 7 als Metallfolie vorgesehen. Nach dem Aufbringen der beiden Elektroden zu beiden Seiten der Glasfasermatte wird durch ein Walzenpaar 8 die Kombination bestehend aus Elektroden und Elektrodenseparatorvorrichtung zusammengepresst, wodurch sich die Struktur 9 ergibt, welche eine Anode, die Separatorvorrichtung sowie eine Kathode umfasst, wobei die Separatorvorrichtung zwischen Anode und Kathode angeordnet ist, und Anode und Kathode den beiden Elektroden entsprechen.

Der Figur 1 ist zu entnehmen, dass die Glasfasermatte ausgehend von der Rolle 1, unter Spannung verarbeitet wird, wobei das gegenüberliegende Rollenpaar 8 und die Rolle 1 derart betrieben werden, dass die Glasfasermatte unter Spannung steht. Gemäß einer alternativen Ausführung der Figur 1 werden die Elektroden durch die Walzen 6 und 7 vor der Kalandervorrichtung 4 oder auch mit den Walzen der Kalandervorrichtung 4 aufgebracht, gleichzeitig mit dem Verpressen. Da jedoch in diesem Fall bereits undurchsichtige Metallfolien die Glasfasermatte umgeben, ist keine optische Kontrollvorrichtung 5 zur optischen Kontrolle vorgesehen.

Gemäß der in Figur 1 dargestellten Ausführung, die eine optische Kontrolle 5 umfasst, ist die optische Kontrolle 5 mit einer Markierungsvorrichtung verbunden (nicht dargestellt), die einen optisch erfassten Fehler in der mit Mischung vorgesehenen Glasmatte markiert, um die entsprechende Stelle in einem späteren Schritt die fehlerhafte Stelle zu lokalisieren, und die fehlerhafte Stelle auszustanzen oder äuszuschneiden. Vorzugsweise werden die Elektroden oder zumindest eine der Elektroden nach dem Ausschneiden aufgebracht.

Das Verhältnis von Keramik zu Bindemittel in der Keramik-Bindemittel-Mischung beträgt vorzugsweise 60:40 bis 80:20 gemessen am Volumen des Keramikpulvers /des Bindemittels. Das Mischungsverhältnis von Keramik I zu Polymer und die Partikelgröße der Keramikpartikel werden vorzugsweise derart vorgesehen, dass die erfindungsgemäß erzeugte Keramik-Elektrodenseparatorvorrichtung durch eine Schicht vorgesehen wird, in der ein gewisser Prozentsatz aller Keramikpartikel aneinander stößt und somit ein Ionen leitender Pfad durch die gesamte Vorrichtung hindurch entsteht. Dieser Prozentsatz ist vorzugsweise größer als 20, 40, 50, 70 oder 90 % und kann durch Betrachtung eines Querschnitts durch die Elektrodenseparatorvorrichtung hindurch mittels eines Mikroskops oder durch elektrische Erfassung der lonenleitung, bezogen auf eine Fläche durch Strommessung, erfasst werden.

Gemäß einer weiteren, nicht dargestellten Ausführungsform führen die Walzen 6, 7 nicht durchgängige Metallfolien, sondern voneinander getrennte Metallfolienstücke der Matrix zu. Die Metallfolienstücke können auf einem (vorzugsweise transparenten oder transluzenten) Endlosbandträger vorgesehen sein, der nicht leitet. Dies ermöglicht eine unmittelbare Erfassung der elektrischen Eigenschaften des Erzeugnisses, um beispielsweise eine Eingangsgröße für die Regelung des in Figur 1 dargestellten Prozesses vorzusehen. Da eine derartige Überprüfung eine optische Kontrolle ersetzen kann, können mittels der Kalandrierrollen auch die Elektrodenabschnitte aufgebracht werden, wobei die Walzen 6 und 7 durch die beiden Walzen der Kalandriervorrichtung 4 vorgesehen werden. In diesem Fall wird zwar unmittelbar eine Struktur geschaffen, deren Inneres nicht optisch erfasst werden kann, jedoch ermöglicht das Zuführen einzelner Elektrodenstücke die aktuelle Kontrolle der entstehenden galvanischen Zellen.

Die erfindungsgemäße Keramik-Elektrodenseparatorvorrichtung kann zur Herstellung von Batteriepacks oder von galvanischen Zellen verwendet werden, die ohne flüssiges Elektrolyt arbeiten. Zumindest eine der Elektroden, die durch die Walzen 6 bzw. 7 zugeführt werden, wird als perforierte Metallfolie vorgesehen, um die Zuführung von Reaktionsmittel von außen zu ermöglichen.

## Patentansprüche

1. Verfahren zur Herstellung einer Keramik-Elektrodenseparatorvorrichtung, mit den Schritten:
Vorsehen von Keramikpartikeln aus einem Ionen leitenden Material; Mischen der Keramikpartikeln mit einem Bindemittel, wodurch sich eine Keramik-Bindemittel-Mischung ergibt, wobei das Verhältnis von Keramik zu Bindemittel in der Keramik-Bindemittel-Mischung vorzugsweise 60:40 bis 80:20 gemessen am Volumen des Keramikpulvers/des Bindemittels beträgt;
Einbringen der Mischung in Zwischenräume einer Matrix (2; 4), wobei das Einbringen vor dem Verfestigen ausgeführt wird und die Matrix vorgesehen wird durch eine Glasfasermatte mit einer geringeren Dicke als 1mm, wobel die Glasfasermatte eine dichte Faserstruktur hat, so dass darauf aufgebrachtes Pulver nur geringfügig oder nicht durch die Glasfasermatte hindurch tritt;
Aufbringen einer Elektrode einer ersten Polarität in Form eines Endlosbandes auf die Glasfasermatte, in der sich die Keramik-Bindemittel-Mischung befindet, wobei die Elektrode als Metallband vorgesehen ist, wobei die Glasfasermatte gespannt wird, so dass die Elektrode der ersten Polarität unter einem vordefinierten Druck auf die Glasfasermatte aufdrückt wird,
Ausformen (4) der Mischung gemäß einer vorgegebenen Form und
Verfestigen der geformten Mischung.

2. Verfahren nach Anspruch 1, wobei das Bindemittel vorgesehen wird durch ein Thermoplast, das Verfahren ferner ein zumindest teilweises Aufschmelzen des Bindemittel umfasst, und das Verfestigen durch Erkalten des Bindemittels vorgesehen wird, oder wobei das Bindemittel vorgesehen wird durch einen Klebemittel und das Verfestigen durch Erwärmen des Klebemittels oder durch wärme- oder UV-unterstütztes Aushärten des Klebemittels vorgesehen wird.

3. Verfahren nach einem der vorangehenden Ansprüche, wobei das Ausformen umfasst: Kalandrieren, Walzen, Pressen, Verdichten oder Stempeln der Mischung gemäß der Form, wobei die Form eine konstante Schichtdicke der Mischung, eine ebene Erstreckung der Mischung, oder beides umfasst oder der Schritt des Ausformens das Ausformen der Mischung zu einer Folie, Schicht oder Platte mit konstanter Dicke umfasst.

4. Verfahren nach einem der vorangehenden Ansprüche, wobei die Keramikpartikel aus einem Metallionen leitenden Material, aus einem Lithiumionen leitenden Material oder aus einem Festelektrolytmaterial vorgesehen werden, und wobei die Kerarnikparfikel in Form von Pulver oder Granulat vorgesehen werden.

5. Keramik-Elektrodenseparatorvorrichtung mit einem Verbundwerkstoff, der Keramikpartikel aus einem Ionen leitenden Material sowie ein Bindemittel umfasst, wobei die Keramikpartikel und das Bindemittel zu einer Keramik-Bindemittel-Mischung vermischt sind, wobei das Bindemittel zwischen den Kerarnlkpartlkel angeordnet ist und durch Adhäsionskräfte die Keramikpartikel verbindet, wobei das Verhältnis von Keramik zu Bindemittel in der Keramik-Bindcmittel-Misehung vorzugsweise 60:40 bis 80:20 gemessen am Volumen des Keramikpulvers/des Bindemittels beträgt, wobei der Verbundwerkstoff als Faserverbundwerkstoff vorgesehen ist und ferner eine Matrix mit Zwischenräumen umfasst, in denen die Keramik-Bindemittel-Mischung angeordnet ist, welche durch Adhäsionskräfte, durch formschlüssige Verbindungen oder durch beides mit der Matrix verbunden ist, wobei die Matrix durch eine Glasfasermatte mit einer geringeren Dicke als 1mm vorgesehen ist, wobei die Glasfasermatte eine dichte Faserstruktur hat, so dass darauf aufgebrachtes Pulver nur geringfügig oder nicht durch die Glasfasermatte hindurch tritt, und einer Elektrode einer ersten Polarität in Form eines Endlosbandes, welche sich auf die Glasfasermatte, in der sich die Keramik-Bindemittel-Mischung befindet, wobei die Elektrode als Metallband vorgesehen ist

6. Keramik-Elektrodenseparatorvorrichtung nach Anspruch 5, wobei das Bindemittel ein Thermoplast, Klebemittel, oder durch Wärme oder durch UV-Licht härtbares oder verfestigbares Klebemittel umfasst, wobei das Bindemittel nicht elektrisch leitend ist.

7. Keramik-Elektrodenseparatorvorrichtung nach Anspruch 5 oder 6, wobei die Keramikpartikel ein Metallionen leitendes Material oder ein Lithiumionen leitendes Material umfassen und als Pulver oder als Granulat ausgeformt sind.

8. Galvanische Zelle mit einer Keramik-Elektrodenseparatorvorrichtung nach Anspruch 5, 6oder 7, wobei die galvanische Zelle zumindest eine leitende Elektrodenfläche umfasst, und die leitende Elektrodenfläche auf einer Oberfläche der Keramik-Elektrodenseparatorvorrichtung vorgesehen ist.

## Claims

1. Process for producing a ceramic electrode separator device, which comprises the steps:
provision of ceramic particles composed of an ion-conducting material;
mixing of the ceramic particles with a binder to give a ceramic/binder mixture, where the ratio of ceramic to binder in the ceramic/binder mixture is preferably from 60:40 to 80:20, measured according to the volume of the ceramic powder/the binder;
introduction of the mixture into interstices of a matrix (2; 4), where the introduction is carried out before solidification and the matrix is provided by a glass fibre mat having a thickness of less than 1 mm, where the glass fibre mat has a dense fibre structure so that powder applied thereto penetrates to only a small extent or not at all through the glass fibre mat;
application of an electrode having a first polarity in the form of a continuous strip to the glass fibre mat in which the ceramic/binder mixture is present, where the electrode is provided as metal strip, where the glass fibre mat is clamped so that the electrode having the first polarity is pressed onto the glass fibre mat under a predefined pressure,
moulding (4) of the mixture according to a predetermined shape and
solidification of the shaped mixture.

2. Process according to Claim 1, wherein the binder is provided by a thermoplastic, the process further comprises at least partial melting of the binder and solidification is provided by cooling of the binder, or the binder is provided by an adhesive and solidification is provided by heating of the adhesive or by heat- or UV-assisted curing of the adhesive.

3. Process according to either of the preceding claims, wherein moulding comprises: calendaring, rolling, pressing, compaction or stamping of the mixture according to the shape, where the shape comprises a constant layer thickness of the mixture, even extension of the mixture or both, or the step of moulding comprises moulding of the mixture to give a film, layer or plate having a constant thickness.

4. Process according to any of the preceding claims, wherein the ceramic particles are provided by a material which conducts metal ions, by a material which conducts lithium ions or by a solid electrolyte material and the ceramic particles are provided in the form of powder or granules.

5. Ceramic electrode separator device having a composite which comprises ceramic particles composed of an ion-conducting material and a binder, where the ceramic particles and binder are mixed to form a ceramic/binder mixture the binder is located between the ceramic particles and joins the ceramic particles by means of adhesive forces, where the ratio of ceramic to binder in the ceramic/binder mixture is preferably from 60:40 to 80:20, measured according to the volume of the ceramic powder/the binder, where the composite is provided as fibre composite and further comprises a matrix having interstices in which the ceramic/binder mixture is located, which mixture is bound by adhesive forces, positive locking or both to the matrix, where the matrix is provided by a glass fibre mat having a thickness of less than 1 mm and the glass fibre mat has a dense fibre structure so that powder applied thereto penetrates only slightly or not at all through the glass fibre mat, and an electrode having a first polarity in the form of a continuous strip which on the glass fibre mat in which the ceramic/binder mixture is present, where the electrode is provided as metal strip.

6. Ceramic electrode separator device according to Claim 5, wherein the binder comprises a thermoplastic, adhesive or adhesive which can be cured or solidified by heat or by UV light and the binder is not electrically conductive.

7. Ceramic electrode separator device according to Claim 5 or 6, wherein the ceramic particles comprise a material which conducts metal ions or a material which conducts lithium ions and are in the form of powder or granules.

8. Electrochemical cell having a ceramic electrode separator device according to Claim 5, 6 or 7, wherein the electrochemical cell comprises at least one conductive electrode area and the conductive electrode area is provided on a surface of the ceramic electrode separator device.

## Revendications

1. Procédé de fabrication d'un dispositif séparateur céramique d'électrodes, comportant les étapes:
fourniture de particules céramiques en un matériau conducteur d'ions ;
mélange des particules céramiques avec un liant, ce qui donne un mélange céramique-liant, le rapport de la céramique au liant dans le mélange céramique-liant étant de préférence de 60:40 à 80:20, mesuré sur le volume de la poudre céramique/du liant ;
introduction du mélange dans les espaces intermédiaires d'une matrice (2; 4), l'introduction étant réalisée avant la consolidation, et la matrice étant réalisée par un mat de fibres de verre ayant une épaisseur inférieure à 1 mm, le mat de fibres de verre présentant une structure dense de fibres de telle sorte que la poudre appliquée par-dessus ne pénètre que peu, ou pas du tout, à travers le mat de fibres de verre ;
application d'une électrode ayant une première polarité sous forme d'une bande sans fin sur la mat de fibres de verre dans lequel se trouve le mélange céramique-liant, l'électrode étant fournie sous forme d'une bande métallique, le mat de fibres de verre étant ainsi tendu de telle sorte que l'électrode ayant la première polarité appuie sous une pression prédéfinie sur le mat de fibres de verre,
façonnage (4) du mélange selon une forme prédéfinie, et
solidification du mélange formé.

2. Procédé selon la revendication 1, dans lequel le liant est fourni par un thermoplastique, le procédé comprend en outre une fusion au moins partielle du liant, et la consolidation est réalisée par refroidissement du liant, ou encore le liant est fourni par un adhésif, et la consolidation est réalisée par chauffage de l'adhésif ou par durcissement de l'adhésif à chaud ou sous l'action d'UV.

3. Procédé selon l'une des revendications précédentes, dans lequel le façonnage comprend: le calandrage, le laminage, le pressage, le compactage ou l'estampage du mélange conformément à la forme, la forme comprenant une épaisseur de couche constante du mélange, une extension plane du mélange, ou les deux, ou l'étape de façonnage comprend le façonnage du mélange en une feuille, une couche ou une plaque ayant une épaisseur constante.

4. Procédé selon l'une des revendications précédentes, dans lequel les particules céramiques sont réalisées en un matériau conducteur d'ions métalliques, en un matériau conducteur d'ions lithium ou en un matériau électrolyte solide, les particules céramiques se présentant sous forme d'une poudre ou d'un granulé.

5. Dispositif séparateur céramique d'électrodes comportant un matériau composite, qui comprend des particules céramiques en un matériau conducteur d'ions, ainsi qu'un liant, les particules céramiques et le liant étant mélangés pour donner un mélange céramique-liant, le liant étant disposé entre les particules céramiques et reliant les particules céramiques par des forces d'adhérence, le rapport de la céramique au liant dans le mélange céramique-liant étant de préférence de 60:40 à 80:20, mesuré sur le volume de la poudre céramique/du liant, le matériau composite étant réalisé sous forme d'un matériau composite de fibres et comprenant en outre une matrice comportant des espaces intermédiaires, dans lesquels est disposé le mélange céramique-liant, qui est relié à la matrice par des forces d'adhérence, par des composés assurant une liaison avec correspondance de forme, ou par les deux, la matrice étant réalisée par un mat de fibres de verre ayant une épaisseur inférieure à 1 mm, le mat de fibres de verre ayant une structure dense de fibres de telle sorte que la poudre appliquée par-dessus ne traverse que peu, ou pas du tout, le mat de fibres de verre, et une électrode ayant une première polarité sous forme d'une bande sans fin qui se sur le mat de fibres de verre dans lequel se trouve le mélange céramique-liant, l'électrode étant réalisée sous forme d'une bande métallique.

6. Dispositif séparateur céramique d'électrodes selon la revendication 5, dans lequel le liant comprend un thermoplastique, un adhésif, ou un adhésif pouvant durcir ou se consolider sous l'effet de la chaleur ou d'une lumière UV, le liant n'étant pas conducteur de l'électricité.

7. Dispositif séparateur céramique d'électrodes selon la revendication 5 ou 6, dans lequel les particules céramiques comprennent un matériau conducteur d'ions métalliques ou un matériau conducteur d'ions lithium, et sont façonnées sous forme d'une poudre ou d'un granulé.

8. Cellule galvanique comportant un dispositif séparateur céramique d'électrodes selon la revendication 5, 6 ou 7, la cellule galvanique comprenant au moins une surface d'électrode conductrice, et la surface d'électrode conductrice étant réalisée sur une surface du dispositif séparateur céramique d'électrodes.
